# EUROPEAN PATENT APPLICATION

(11) **EP 4 841 876 A1**
(43) Date of publication of application: **18.11.2026**
(21) Application number: 26175080.6
(22) Date of filing: 28.04.2026
(51) Int. Cl.: H02M 3/07

(54) **FLYING CAPACITOR MATRIX SYSTEM FOR CHARGE PUMP**

(30) Priority: 13.05.2025 US 202519207345
(71) Applicant: Himax Technologies Limited, Tainan City 74148 (TW)
(72) Inventor: Hou, Zong-You, 74148 Tainan City (TW); Chang, Yaw-Guang, 74148 Tainan City (TW); He, Jia-Ming, 74148 Tainan City (TW)
(74) Representative: Straus, Alexander

(57) **Abstract**

A flying capacitor matrix system (300) includes two flying capacitors (C2, C3), and six switches (S5-S 10). The first node of the first flying capacitor (C2) is coupled to the second node of the second flying capacitor (C3). The second node of the first flying capacitor (C2) is coupled to the first and second switches (S5, S6). The first node of the first flying capacitor (C2) is coupled to the third and fourth switches (S7, S8). The first node of the second flying capacitor (C3) is coupled to the fifth and sixth switches (S9, S10). The first switch (S5), the third switch (S7) and the fifth switch (S9) are turned on in a first phase and turned off in a second phase. The second switch (S6), the fourth switch (S8) and the sixth switch (S10) are turned off in the first phase and turned on in the second phase.

## Description

### Field of the Invention

The present invention is related to a flying capacitor matrix system, in particularly, to a flying capacitor matrix system for a charge pump.

### Background of the Invention

In modern electronic products, charge pumps are commonly used in a variety of integrated circuits (ICs) to generate positive and negative voltages, or generate higher bias voltages (such as 10V or 6V) with a single 5V or 3V power supply. Taking touch ICs as an example, since the transmitter of a touch IC needs to output a ±9V waveform to the panel capacitor, a charge pump is needed to generate -3V, ±6V, and ±9V using a flying capacitor matrix system. In addition, the negative voltage can also be used to connect to the IC substrate, which can reduce the node capacitance and increase the speed of the circuit.

Modern DC-DC power conversion technology includes linear regulators and switching regulators. In the early days, traditional linear regulators were used, but their disadvantages were poor efficiency and large size. Later, switching regulators, also known as charge pump circuits, were developed, which have the advantages of high efficiency and small size. With the development of integrated circuits (ICs) and passive components, the reliability of charge pump circuits has been improved, and played a vital role in electronic systems.

As modem ICs are becoming smaller and more sophisticated, how to save IC area and size has become a development focus for IC designs. It is essential to use the flying capacitor matrix system to reduce circuit switches and save solder pads, thus further reduce IC area and save costs.

### Summary of the Invention

The present invention is set out in the appended set of claims.

### Brief Description of the Drawings

In the following, the disclosure is further illustrated by way of example, taking reference to the accompanying drawings. Thereof:
FIG.1 is a schematic diagram of a flying capacitor matrix system for a charge pump according to an embodiment of the present invention;
FIG.2A is a schematic diagram of a flying capacitor system for a charge pump according to an embodiment of the present invention;
FIG.2B is a schematic diagram of a first flying capacitor system for a charge pump according to an embodiment of the present invention;
FIG.3 is a schematic diagram of a flying capacitor matrix system for a charge pump according to another embodiment of the present invention;
FIG.4 is a schematic diagram of a second flying capacitor system for a charge pump according to an embodiment of the present invention;
FIG.5 is a schematic diagram of a flying capacitor matrix system for a charge pump according to another embodiment of the present invention;
FIG.6 is a schematic diagram of a third flying capacitor system for a charge pump according to an embodiment of the present invention;
FIG.7 is a schematic diagram of a flying capacitor matrix system for a charge pump according to another embodiment of the present invention;
FIG.8 is a schematic diagram of a fourth flying capacitor system for a charge pump according to an embodiment of the present invention;
FIG.9 is a schematic diagram of a flying capacitor matrix system for a charge pump according to another embodiment of the present invention;
FIG.10 is a schematic diagram of a fifth flying capacitor system for a charge pump according to an embodiment of the present invention; and
FIG.11 is a schematic diagram of a flying capacitor matrix system for a charge pump according to another embodiment of the present invention.

### Detailed Description

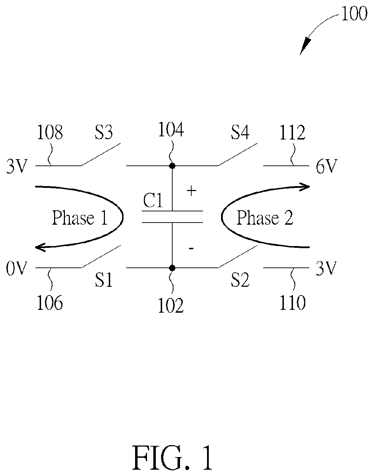

FIG.1 is a schematic diagram of a flying capacitor matrix system 100 for a charge pump according to an embodiment of the present invention. The flying capacitor matrix system 100 includes a first flying capacitor C1, a first switch S1, a second switch S2, a third switch S3, and a fourth switch S4. The first flying capacitor C1 has a first node 104 and a second node 102. The first switch S1 has a first node for receiving a first voltage, and a second node coupled to the second node 102 of the first flying capacitor C1. The second switch S2 has a first node coupled to the second node 102 of the first flying capacitor C1, and a second node 110 for receiving a second voltage. The third switch S3 has a first node 108 for receiving the second voltage, and a second node coupled to the first node 104 of the first flying capacitor C1. The fourth switch S4 has a first node coupled to the first node 104 of the first flying capacitor C1, and a second node 112 for outputting a third voltage. In an embodiment, the first voltage can be 0V, the second voltage can be 3V, and the third voltage can be 6V.

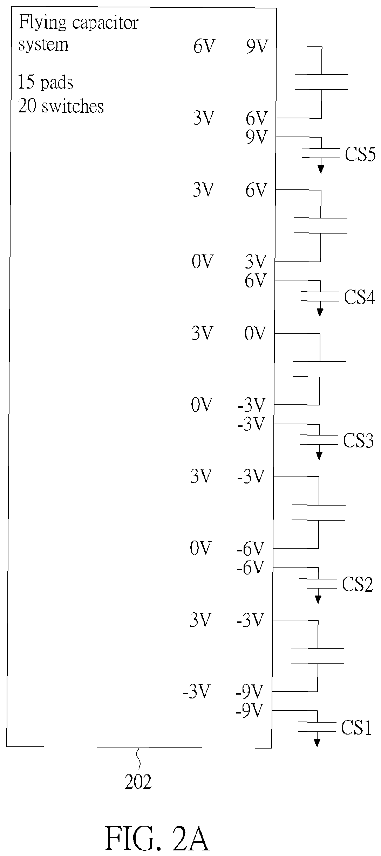

In phase 1, the first switch S1 and the third switch S3 are turned on, and the second switch S2 and the fourth switch S4 are turned off. In phase 2, the first switch S1 and the third switch S3 are turned off, and the second switch S2 and the fourth switch S4 are turned on. Phase 1 and phase 2 alternate in sequence. In phase 1, the first node 104 of the first flying capacitor C1 is charged to 3V and the second node 102 of the first flying capacitor C1 is charged to 0V. Therefore, the voltage difference between the first node 104 and the second node 102 of the first flying capacitor C1 is 3V. In phase 2, the second node 102 of the first flying capacitor C1 is charged to 3V, and the first node 104 of the first flying capacitor C1 is pumped up to 6V due to the 3V voltage difference of the first flying capacitor C1. Thus, the second node 112 of the fourth switch S4 can output 6V for further usage. In an embodiment, the second node 112 of the fourth switch S4 can be coupled to a voltage stabilizing capacitor CS4 (as shown in FIG.2A), which is used to supply 6V for normal usage. If the second node 112 of the fourth switch S4 is coupled to a voltage stabilizing capacitor CS4, the flying capacitor matrix system 100 would have 4 switches and 3 solder pads. Two of the three solder pads are used to solder the first node 104 and second node 102 of the first flying capacitor C1 onto a printed circuit board (PCB), and the remaining solder pad is used to connect the voltage stabilizing capacitor CS4 to the PCB.

FIG.2A is a schematic diagram of a flying capacitor system 202 for a charge pump according to an embodiment of the present invention. The flying capacitor system 202 includes 5 flying capacitors, 5 voltage stabilizing capacitors, 20 switches, and 15 solder pads. The flying capacitor system 202 can supply -3V, ±6V, and ±9V in addition to 0V and 3V (DC power supply).

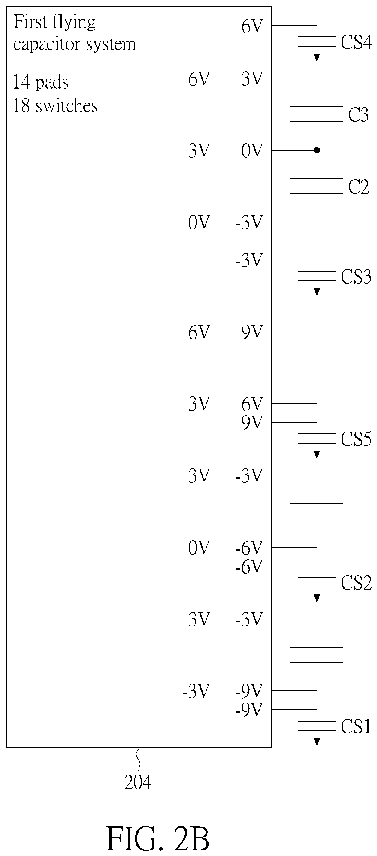

FIG.2B is a schematic diagram of a first flying capacitor system 204 for a charge pump according to an embodiment of the present invention. The flying capacitor system 202 can be improved to become the first flying capacitor system 204. The first flying capacitor system 204 includes 5 flying capacitors, 5 voltage stabilizing capacitors, 18 switches, and 14 solder pads. The first flying capacitor system 204 uses common 3V and common 0V to combine two flying capacitors C2, C3, and thus only has 18 switches and 14 solder pads. Therefore, the first flying capacitor system 204 saves 2 switches and 1 solder pad compared to the flying capacitor system 202, reducing integrated circuit (IC) area and saving costs.

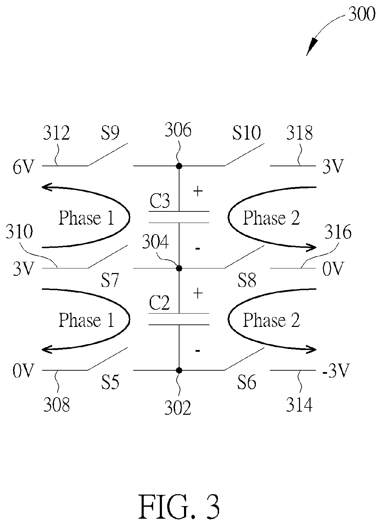

FIG.3 is a schematic diagram of a flying capacitor matrix system 300 for a charge pump according to another embodiment of the present invention. The flying capacitor matrix system 300 is embedded in the first flying capacitor system 204 and includes a second flying capacitor C2, a third flying capacitor C3, a fifth switch S5, a sixth switch S6, a seventh switch S7, an eighth switch S8, a ninth switch S9 and a tenth switch S10. The second flying capacitor C2 has a first node 304 and a second node 302. The third flying capacitor C3 has a first node 306, and a second node coupled to the first node 304 of the second flying capacitor C2. The fifth switch S5 has a first node 308 for receiving 0V power supply, and a second node coupled to the second node 302 of the second flying capacitor C2. The sixth switch S6 has a first node coupled to the second node 302 of the second flying capacitor C2, and a second node 314 for outputting -3V. The seventh switch S7 has a first node 310 for receiving 3V power supply, and a second node coupled to the first node 304 of the second flying capacitor C2. The eighth switch S8 has a first node coupled to the first node 304 of the second flying capacitor C2, and a second node 316 for receiving 0V power supply. The ninth switch S9 has a first node 312 for outputting 6V, and a second node coupled to the first node 306 of the third flying capacitor C3. The tenth switch S10 has a first node coupled to the first node 306 of the third flying capacitor C3, and a second node 318 for receiving 3V power supply. In an embodiment, -3V, 0V, 3V, 6V are only an example, and may be -5V, 0V, 5V, 10V or other voltages.

In phase 1, the fifth switch S5, the seventh switch S7, and the ninth switch S9 are turned on, and the sixth switch S6, the eighth switch S8, and the tenth switch S10 are turned off. In phase 2, the fifth switch S5, the seventh switch S7, and the ninth switch S9 are turned off, and the sixth switch S6, the eighth switch S8, and the tenth switch S10 are turned on. Phase 1 and phase 2 alternate in sequence. In phase 1, the first node 304 of the second flying capacitor C2 is charged to 3V and the second node 302 of the second flying capacitor C2 is charged to 0V. Therefore, the voltage difference between the first node 304 and the second node 302 of the second flying capacitor C2 is 3V. In phase 2, the first node 304 of the second flying capacitor C2 is charged to 0V, and the second node 302 of the second flying capacitor C2 is pumped to -3V due to the 3V voltage difference of the second flying capacitor C2. Thus the second node 314 of the sixth switch S6 can output -3V for further usage. In an embodiment, the second node 314 of the sixth switch S6 can be coupled to a voltage stabilizing capacitor CS3, which is used to supply -3V for normal usage.

In phase 2, the first node 306 of the third flying capacitor C3 is charged to 3V and the second node 304 of the third flying capacitor C3 is charged to 0V. Therefore, the voltage difference between the first node 306 and the second node 304 of the third flying capacitor C3 is 3V. In phase 1, the second node 304 of the third flying capacitor C3 is charged to 3V, and the first node 306 of the third flying capacitor C3 is pumped to 6V due to the 3V voltage difference of the third flying capacitor C3. Thus the first node 312 of the ninth switch S9 can output 6V for further usage. In an embodiment, the first node 312 of the ninth switch S9 can be coupled to a voltage stabilizing capacitor CS4, which is used to supply 6V for normal usage. If the second node 314 of the sixth switch S6 is coupled to the voltage stabilizing capacitor CS3, and the first node 312 of the ninth switch S9 is coupled to the voltage stabilizing capacitor CS4, by combining the second flying capacitor C2 and the third flying capacitor C3, the flying capacitor matrix system 300 only uses 6 switches and 5 solder pads. Three of the five solder pads are used to solder the first node 304 and second node 302 of the second flying capacitor C2, and the first node 306 of the third flying capacitor C3 onto a printed circuit board (PCB). The two remaining solder pads are used to connect the voltage stabilizing capacitors CS3, CS4 to the PCB. In this way, the first flying capacitor system 204 including the flying capacitor matrix system 300 uses common 3V and common 0V to combine two flying capacitors C2, C3, and thus only uses 18 switches and 14 solder pads. Compared to the flying capacitor system 202, the first flying capacitor system 204 saves 2 switches and 1 solder pad, reducing IC area and saving costs.

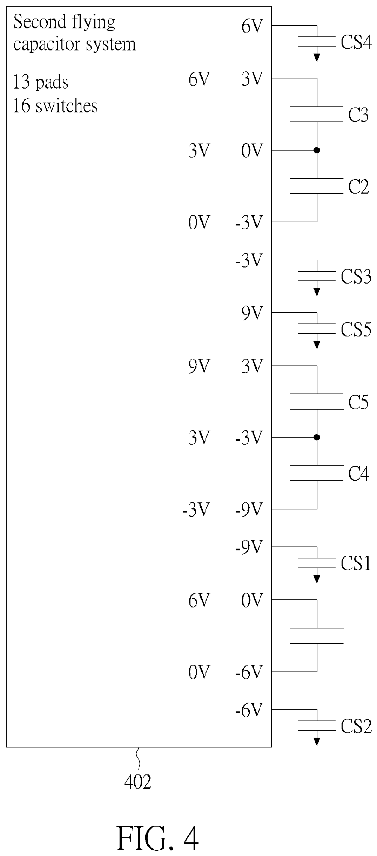

FIG.4 is a schematic diagram of a second flying capacitor system 402 for a charge pump according to an embodiment of the present invention. The first flying capacitor system 204 includes 5 flying capacitors, 5 voltage stabilizing capacitors, 18 switches, and 14 solder pads. The first flying capacitor system 204 can supply -3V, ±6V, and ±9V in addition to 0V and 3V (DC power supply). However, the first flying capacitor system 204 can be improved to become the second flying capacitor system 402. The second flying capacitor system 402 includes 5 flying capacitors, 5 voltage stabilizing capacitors, 16 switches, and 13 solder pads. The second flying capacitor system 402 uses common 3V and common -3V to combine the second flying capacitor C2 and the third flying capacitor C3, and combine a fourth flying capacitor C4 and a fifth flying capacitor C5, thus only uses 16 switches and 13 solder pads. Compared to the flying capacitor system 202, the second flying capacitor system 402 saves 4 switches and 2 solder pads, reducing IC area and saving costs.

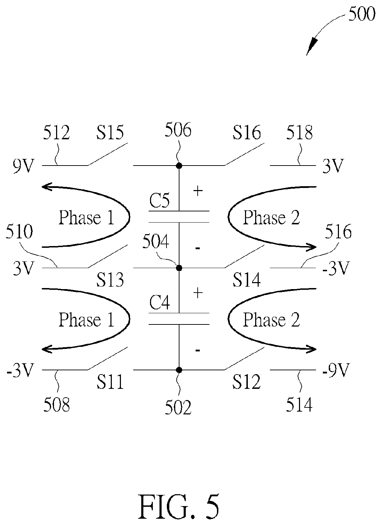

FIG.5 is a schematic diagram of a flying capacitor matrix system 500 for a charge pump according to another embodiment of the present invention. The flying capacitor matrix system 500 is embedded in the flying capacitor system 402 and includes a fourth flying capacitor C4, a fifth flying capacitor C5, an eleventh switch S11, a twelfth switch S12, a thirteenth switch S13, an fourteenth switch S14, a fifteenth switch S15 and a sixteenth switch S16. The fourth flying capacitor C4 has a first node 504 and a second node 502. The fifth flying capacitor C5 has a first node 506, and a second node coupled to the first node 504 of the fourth flying capacitor C4. The eleventh switch S11 has a first node 508 for receiving -3V from the voltage stabilizing capacitor CS3, and a second node coupled to the second node 502 of the fourth flying capacitor C4. The twelfth switch S12 has a first node coupled to the second node 502 of the fourth flying capacitor C4, and a second node 514 for outputting -9V. The thirteenth switch S13 has a first node 510 for receiving 3V from the power supply, and a second node coupled to the first node 504 of the fourth flying capacitor C4. The fourteenth switch S14 has a first node coupled to the first node 504 of the fourth flying capacitor C4, and a second node 516 for receiving -3V from the voltage stabilizing capacitor CS3. The fifteenth switch S15 has a first node 512 for outputting 9V, and a second node coupled to the first node 506 of the fifth flying capacitor C5. The sixteenth switch S16 has a first node coupled to the first node 506 of the fifth flying capacitor C5, and a second node 518 for receiving 3V from the power supply. In an embodiment, -9V, -3V, 3V, 9V are only an example, and may be -10V, -5V, 5V, 10V or other voltages.

In phase 1, the eleventh switch S11, the thirteenth switch S13, and the fifteenth switch S15 are turned on, and the twelfth switch S12, the fourteenth switch S14, and the sixteenth switch S16 are turned off. In phase 2, the eleventh switch S11, the thirteenth switch S13, and the fifteenth switch S15 are turned off, and the twelfth switch S12, the fourteenth switch S14, and the sixteenth switch S16 are turned on. Phase 1 and phase 2 alternate in sequence. In phase 1, the first node 504 of the fourth flying capacitor C4 is charged to 3V and the second node 502 of the fourth flying capacitor C4 is charged to -3V. Therefore, the voltage difference between the first node 504 and the second node 502 of the fourth flying capacitor C4 is 6V. In phase 2, the first node 504 of the fourth flying capacitor C4 is charged to -3V, and the second node 502 of the fourth flying capacitor C4 is pumped to -9V due to the 6V voltage difference of the fourth flying capacitor C4. Then, the second node 514 of the twelfth switch S12 can output -9V for further usage. In an embodiment, the second node 514 of the twelfth switch S12 can be coupled to a voltage stabilizing capacitor CS1, which is used to supply -9V for normal usage.

In phase 2, the first node 506 of the fifth flying capacitor C5 is charged to 3V and the second node 504 of the fifth flying capacitor C5 is charged to -3V. Therefore, the voltage difference between the first node 506 and the second node 504 of the fifth flying capacitor C5 is 6V. In phase 1, the second node 504 of the fifth flying capacitor C5 is charged to 3V, and the first node 506 of the fifth flying capacitor C5 is pumped to 9V due to the 6V voltage difference of the fifth flying capacitor C5. Then, the first node 512 of the fifteenth switch S15 can output 9V for further usage. In an embodiment, the first node 512 of the fifteenth switch S15 can be coupled to a voltage stabilizing capacitor CS5, which is used to supply 9V for normal usage. If the second node 514 of the twelfth switch S12 is coupled to a voltage stabilizing capacitor CS1, and the first node 512 of the fifteenth switch S15 is coupled to a voltage stabilizing capacitor CS5, by combining the fourth flying capacitor C4 and the fifth flying capacitor C5, the flying capacitor matrix system 500 only uses 6 switches and 5 solder pads. Three of the five solder pads are used to solder the first node 504 and second node 502 of the fourth flying capacitor C4, and the first node 506 of the fifth flying capacitor C5 onto a printed circuit board (PCB). The two remaining solder pads are used to connect the voltage stabilizing capacitors CS1, CS5 to the PCB. In this way, the second flying capacitor system 402 including the flying capacitor matrix system 500 uses common 3V and common -3V to combine two flying capacitors C4, C5, and thus only uses 16 switches and 13 solder pads.

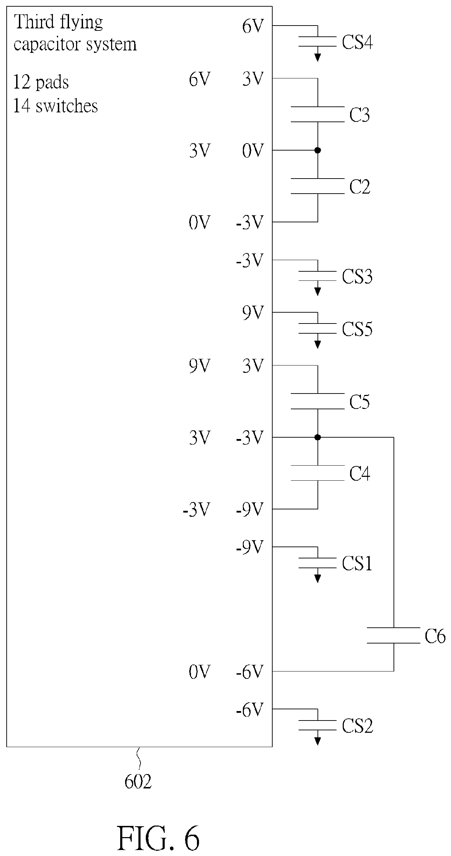

FIG.6 is a schematic diagram of a third flying capacitor system 602 for a charge pump according to an embodiment of the present invention. The second flying capacitor system 402 includes 5 flying capacitors, 5 voltage stabilizing capacitors, 16 switches, and 13 solder pads. The second flying capacitor system 402 can supply -3V, ±6V, and ±9V in addition to 0V and 3V (DC power supply), and the second flying capacitor system 402 uses 16 switches and 13 solder pads. However, the second flying capacitor system 402 can be improved to become the third flying capacitor system 602. The third flying capacitor system 602 includes 5 flying capacitors, 5 voltage stabilizing capacitors, 14 switches, and 12 solder pads. The third flying capacitor system 602 uses common 3V and common -3V to combine three flying capacitors, and thus only uses 14 switches and 12 solder pads. Compared to the flying capacitor system 202, the third flying capacitor system 602 saves 6 switches and 3 solder pads, thus reducing IC area and saving costs.

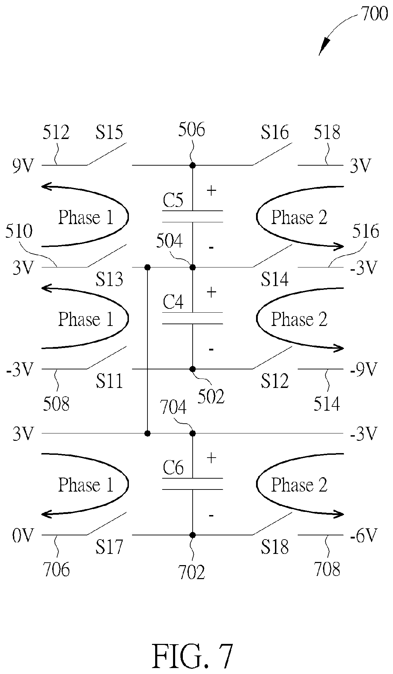

FIG.7 is a schematic diagram of a flying capacitor matrix system 700 for a charge pump according to another embodiment of the present invention. The flying capacitor matrix system 700 is an extended system of the flying capacitor matrix system 500 and is embedded in the third flying capacitor system 602. Compared to the flying capacitor matrix system 500, the flying capacitor matrix system 700 further includes a sixth flying capacitor C6, a seventeenth switch S17, and an eighteenth switch S18. The sixth flying capacitor C6 includes a first node 704 coupled to the first node 504 of the fourth flying capacitor C4 and a second node 702. The seventeenth switch S17 has a first node 706 coupled to the 0V power supply, and a second node coupled to the second node 702 of the sixth flying capacitor C6. The eighteenth switch S18 has a first node coupled to the second node 702 of the sixth flying capacitor C6, and a second node 708 for outputting -6V. In an embodiment, -9V, -6V, -3V, 0V, 3V, 9V are only an example, and may be other voltages.

In phase 1, the eleventh switch S11, the thirteenth switch S13, the fifteenth switch S15, and the seventeenth switch S17 are turned on, and the twelfth switch S12, the fourteenth switch S14, the sixteenth switch S16, and the eighteenth switch S18 are turned off. In phase 2, the eleventh switch S11, the thirteenth switch S13, the fifteenth switch S15, and the seventeenth switch S17 are turned off, and the twelfth switch S12, the fourteenth switch S14, the sixteenth switch S16, and the eighteenth switch S18 are turned on. Phase 1 and phase 2 alternate in sequence. In phase 1, the first node 704 of the sixth flying capacitor C6 is charged to 3V and the second node 702 of the sixth flying capacitor C6 is charged to 0V. Therefore, the voltage difference between the first node 704 and the second node 702 of the sixth flying capacitor C6 is 3V. In phase 2, the first node 704 of the sixth flying capacitor C6 is charged to -3V, and the second node 702 of the sixth flying capacitor C6 is pumped to -6V due to the 3V voltage difference of the sixth flying capacitor C6. Then, the second node 708 of the eighteenth switch S18 can output -6V for further usage. In an embodiment, the second node 708 of the eighteenth switch S18 can be coupled to a voltage stabilizing capacitor CS2, which is used to supply -6V for normal usage. If the second node 514 of the twelfth switch S12 is coupled to the voltage stabilizing capacitor CS1, the first node 512 of the fifteenth switch S15 is coupled to the voltage stabilizing capacitor CS5, and the second node 708 of the eighteenth switch S18 is coupled to the voltage stabilizing capacitor CS2, by combining the fourth flying capacitor C4, the fifth flying capacitor C5, and the sixth flying capacitor C6, the flying capacitor matrix system 700 only uses 8 switches and 7 solder pads. Four of the seven solder pads are used to solder the first node 504 and second node 502 of the fourth flying capacitor C4, the first node 506 of the fifth flying capacitor C5, and the second node 702 of the sixth flying capacitor C6 onto a printed circuit board (PCB). The three remaining solder pads are used to connect the voltage stabilizing capacitors CS1, CS2, CS5 to the PCB. In this way, the third flying capacitor system 602 including the flying capacitor matrix system 700 uses common 3V and common -3V to combine three flying capacitors C4, C5, C6, and thus only uses 14 switches and 12 solder pads.

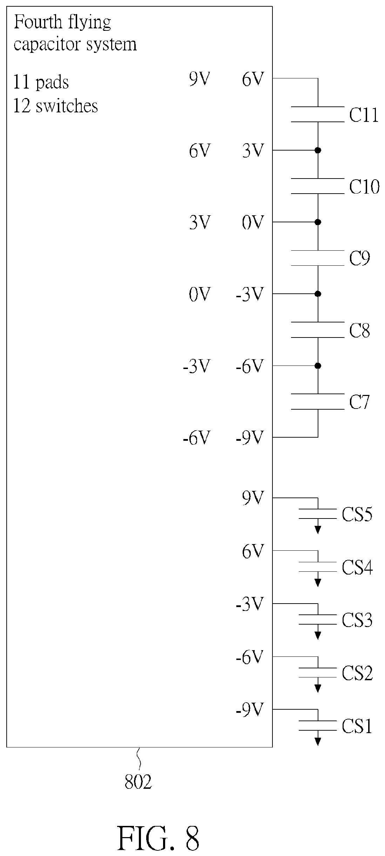

FIG.8 is a schematic diagram of a fourth flying capacitor system 802 for a charge pump according to an embodiment of the present invention. The fourth flying capacitor system 802 includes 5 flying capacitors, 5 voltage stabilizing capacitors, 12 switches, and 11 solder pads. The fourth flying capacitor system 802 uses common -6V, -3V, 0V, 3V, and 6V to combine five flying capacitors, and thus only uses 12 switches and 11 solder pads. Compared to the flying capacitor system 202, the fourth flying capacitor system 802 saves 8 switches and 4 solder pads, thus reducing IC area and saving costs.

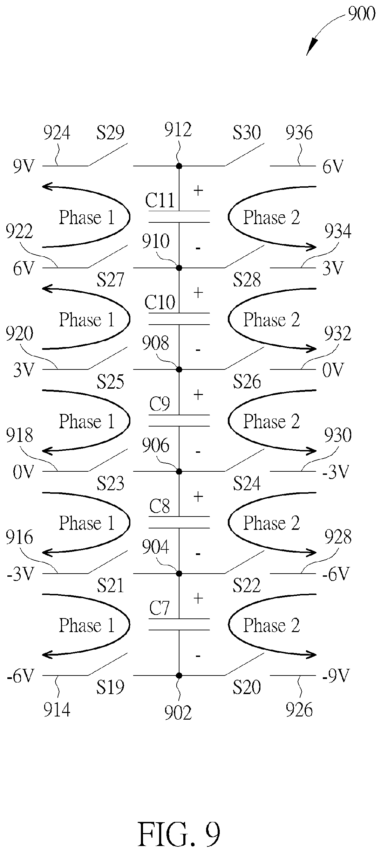

FIG.9 is a schematic diagram of a flying capacitor matrix system 900 for a charge pump according to another embodiment of the present invention. The flying capacitor matrix system 900 is embedded in the fourth flying capacitor system 802 and includes a seventh flying capacitor C7, an eighth flying capacitor C8, a ninth flying capacitor C9, a tenth flying capacitor C10, an eleventh flying capacitor C11, a nineteenth switch S19, a twentieth switch S20, a twenty-first switch S21, a twenty-second switch S22, a twenty-third switch S23, a twenty-fourth switch S24, a twenty-fifth switch S25, a twenty-sixth switch S26, a twenty-seventh switch S27, a twenty-eighth switch S28, a twenty-ninth switch S29, and a thirty switch S30. The seventh flying capacitor C7 includes a first node 904 and a second node 902. The eighth flying capacitor C8 includes a first node 906 and a second node coupled to the first node of the seventh flying capacitor C7. The ninth flying capacitor C9 includes a first node 908 and a second node coupled to the first node 906 of the eighth flying capacitor C8. The tenth flying capacitor C10 includes a first node 910 and a second node coupled to the first node 908 of the ninth flying capacitor C9. The eleventh flying capacitor C11 includes a first node 912 and a second node coupled to the first node 910 of the tenth flying capacitor C10. The nineteenth switch S19 has a first node 914 for receiving -6V from the voltage stabilizing capacitor CS2, and a second node coupled to the second node 902 of the seventh flying capacitor C7. The twentieth switch S20 has a first node coupled to the second node 902 of the seventh flying capacitor C7, and a second node 926 for outputting -9V to the voltage stabilizing capacitor CS1. The twenty-first switch S21 has a first node 916 for receiving -3V from the voltage stabilizing capacitor CS3, and a second node coupled to the first node 904 of the seventh flying capacitor C7. The twenty-second switch S22 has a first node coupled to the first node 904 of the seventh flying capacitor C7, and a second node 928 for outputting -6V to the voltage stabilizing capacitor CS2. The twenty-third switch S23 has a first node 918 for receiving 0V from the power supply, and a second node 906 coupled to the first node 906 of the eighth flying capacitor C8. The twenty-fourth switch S24 has a first node coupled to the first node 906 of the eighth flying capacitor C8, and a second node 930 for outputting -3V to the voltage stabilizing capacitor CS3. The twenty-fifth switch S25 has a first node 920 for receiving 3V from the power supply, and a second node coupled to the first node 908 of the ninth flying capacitor C9. The twenty-sixth switch S26 has a first node coupled to the first node 908 of the ninth flying capacitor C9, and a second node 932 for receiving 0V from the power supply. The twenty-seventh switch S27 has a first node 922 for outputting 6V to the voltage stabilizing capacitor CS4, and a second node coupled to the first node 910 of the tenth flying capacitor C10. The twenty-eighth switch S28 has a first node coupled to the first node 910 of the tenth flying capacitor C10, and a second node 934 for receiving 3V from the power supply. The twenty-ninth switch S29 has a first node 924 for outputting 9V to the voltage stabilizing capacitor CS5, and a second node coupled to the first node 912 of the eleventh flying capacitor C11. The thirtieth switch S30 has a first node coupled to the first node 912 of the eleventh flying capacitor C11, and a second node 936 for receiving 6V from the voltage stabilizing capacitor CS4. In an embodiment, -9V, -6V, -3V, 0V, 3V, 6V, 9V are only an example, and may be other voltages.

In phase 1, the nineteenth switch S19, the twenty-first switch S21, the twenty-third switch S23, the twenty-fifth switch S25, the twenty-seventh switch S27, and the twenty-ninth switch S29 are turned on, and the twentieth switch S20, the twenty-second switch S22, the twenty-fourth switch S24, the twenty-sixth switch S26, the twenty-eighth switch S28, and the thirtieth switch S30 are turned off. In phase 2, the nineteenth switch S19, the twenty-first switch S21, the twenty-third switch S23, the twenty-fifth switch S25, the twenty-seventh switch S27, and the twenty-ninth switch S29 are turned off, and the twentieth switch S20, the twenty-second switch S22, the twenty-fourth switch S24, the twenty-sixth switch S26, the twenty-eighth switch S28, and the thirtieth switch S30 are turned on. Phase 1 and phase 2 alternate in sequence. In the same way as the embodiments in FIG.5 and FIG.7, the second node 926 of the twentieth switch S20 outputs -9V, the second node 928 of the twenty-second switch S22 outputs -6V, and the second node 930 of the twenty-fourth switch S24 outputs -3V in phase 2. The first node 922 of the twenty-seventh S27 outputs 6V, and the first node 924 of the twenty-ninth switch S27 outputs 9V in phase 1. In an embodiment, the output nodes 926, 928, 930, 922, 924 can be coupled to corresponding voltage stabilizing capacitors CS1, CS2, CS3, CS4, CS5, which are used to supply -9V, -6V, -3V, 6V, and 9V for normal usage. If the output nodes 926, 928, 930, 922, 924 are coupled to corresponding voltage stabilizing capacitors CS1, CS2, CS3, CS4, CS5, by combining the seventh flying capacitor C7, the eighth flying capacitor C8, the ninth flying capacitor C9, the tenth flying capacitor C10, and the eleventh flying capacitor C11, the flying capacitor matrix system 900 only uses 12 switches and 11 solder pads. Six of the eleven solder pads are used to solder the first node 904 and second node 902 of the seventh flying capacitor C7, the first node 906 of the eighth flying capacitor C8, the first node 908 of the ninth flying capacitor C9, the first node 910 of the tenth flying capacitor C9, and the first node 912 of the eleventh flying capacitor C11 onto a printed circuit board (PCB). The five remaining solder pads are used to connect the voltage stabilizing capacitors CS1, CS2, CS3, CS4, CS5 to the PCB. In this way, the fourth flying capacitor system 802 including the flying capacitor matrix system 900 uses common -6V, -3V, 0V, 3V, and 6V to combine five flying capacitors C7, C8, C9, C10, C11, and thus only uses 12 switches and 11 solder pads.

In an embodiment, the number of flying capacitors in FIG.9 can be N, where N is a positive integer larger than 1. The number of the switches can be 2N+2, and the number of voltage stabilizing capacitors can be N, being coupled to corresponding output nodes.

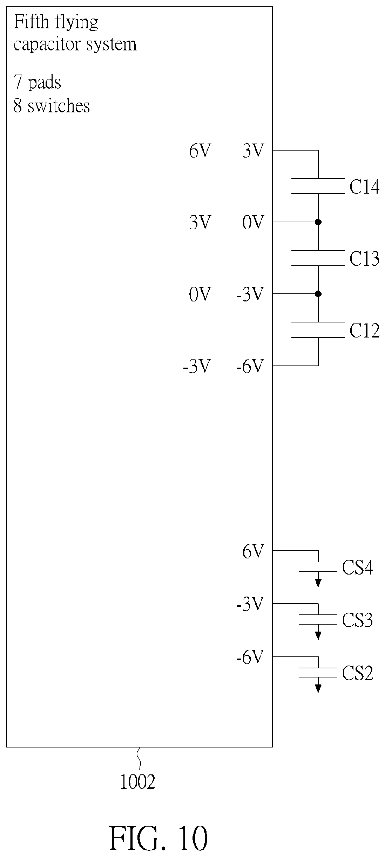

FIG.10 is a schematic diagram of a fifth flying capacitor system 1002 for a charge pump according to an embodiment of the present invention. The fifth flying capacitor system 1002 includes 3 flying capacitors, 3 voltage stabilizing capacitors, 8 switches, and 7 solder pads. The fifth flying capacitor system 1002 uses common -3V, 0V, and 3V to combine three flying capacitors, and thus only uses 8 switches and 7 solder pads. Compared to prior art, the fifth flying capacitor system 1002 saves 4 switches and 2 solder pads, thus reducing IC area and saving costs.

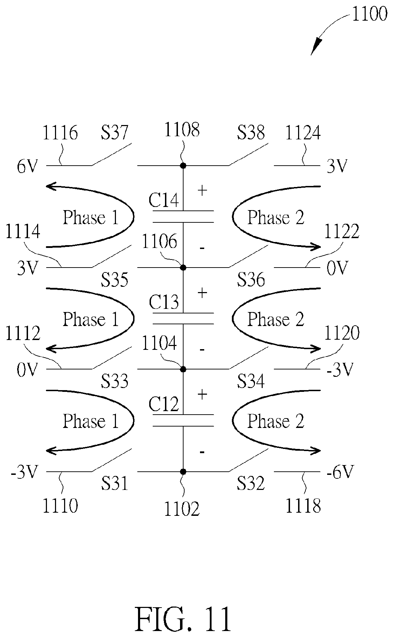

FIG.11 is a schematic diagram of a flying capacitor matrix system 1100 for a charge pump according to another embodiment of the present invention. The flying capacitor matrix system 1100 is embedded in the fifth flying capacitor system 1002 and includes a twelfth flying capacitor C12, a thirteenth flying capacitor C13, a fourteenth flying capacitor C14, a thirty-first switch S31, a thirty-second switch S32, a thirty-third switch S33, a thirty-fourth switch S34, a thirty-fifth switch S35, a thirty-sixth switch S36, a thirty-seventh switch S37, and a thirty-eighth switch S38. The twelfth flying capacitor C12 includes a first node 1104 and a second node 1102. The thirteenth flying capacitor C13 includes a first node 1106 and a second node coupled to the first node 1104 of the twelfth flying capacitor C12. The fourteenth flying capacitor C14 includes a first node 1108 and a second node coupled to the first node 1106 of the thirteenth flying capacitor C13. The thirty-first switch S31 has a first node 1110 for receiving -3V from the voltage stabilizing capacitor CS3, and a second node coupled to the second node 1102 of the twelfth flying capacitor C12. The thirty-second switch S32 has a first node coupled to the second node 1102 of the twelfth flying capacitor C12, and a second node 1118 for outputting -6V to the voltage stabilizing capacitor CS2. The thirty-third switch S33 has a first node 1112 for receiving 0V from the power supply, and a second node coupled to the first node 1104 of the twelfth flying capacitor C12. The thirty-fourth switch S34 has a first node coupled to the first node 1104 of the twelfth flying capacitor C12, and a second node 1120 for outputting -3V to the voltage stabilizing capacitor CS3. The thirty-fifth switch S35 has a first node 1114 for receiving 3V from the power supply, and a second node coupled to the first node 1106 of the thirteenth flying capacitor C13. The thirty-sixth switch S36 has a first node coupled to the first node 1106 of the thirteenth flying capacitor C13, and a second node 1122 for receiving 0V from the power supply. The thirty-seventh switch S37 has a first node 1116 for outputting 6V to the voltage stabilizing capacitor CS4, and a second node coupled to the first node 1108 of the fourteenth flying capacitor C14. The thirty-eighth switch S38 has a first node coupled to the first node 1108 of the fourteenth flying capacitor C14, and a second node 1124 for receiving 3V from the power supply. In an embodiment, -6V, -3V, 0V, 3V, 6V are only an example, and may be other voltages.

In phase 1, the thirty-first switch S31, the thirty-third switch S33, the thirty-fifth switch S35, and the thirty-seventh switch S37 are turned on, and the thirty-second switch S32, the thirty-fourth switch S34, the thirty-sixth switch S36, and the thirty-eighth switch S38 are turned off. In phase 2, the thirty-first switch S31, the thirty-third switch S33, the thirty-fifth switch S35, and the thirty-seventh switch S37 are turned off, and the thirty-second switch S32, the thirty-fourth switch S34, the thirty-sixth switch S36, and the thirty-eighth switch S38 are turned on. Phase 1 and phase 2 alternate in sequence. In the same way as the embodiments in FIG.5 ,FIG.7, and FIG.9, the second node 1118 of the thirty-second switch S32 outputs -6V, and the second node 1120 of the thirty-fourth switch S34 outputs -3V in phase 2. The first node 1116 of the thirty-seventh S37 outputs 6V in phase 1. In an embodiment, the output nodes 1118, 1120, and 1116 can be coupled to corresponding voltage stabilizing capacitors CS2, CS3, CS4, which are used to supply -6V, -3V, and 6V for normal usage. If the output nodes 1118, 1120, and 1116 are coupled to corresponding voltage stabilizing capacitors CS2, CS3, CS4, by combining the twelfth flying capacitor C12, the thirteenth flying capacitor C13, and the fourteenth flying capacitor C14, the flying capacitor matrix system 1100 only uses 8 switches and 7 solder pads. Four of the seven solder pads are used to solder the first node 1104 and second node 1102 of the twelfth flying capacitor C12, the first node 1106 of the thirteenth flying capacitor C13, and the first node 1108 of the fourteenth flying capacitor C14 onto a printed circuit board (PCB). The three remaining solder pads are used to connect the voltage stabilizing capacitors CS2, CS3, CS4 to the PCB. In this way, the fifth flying capacitor system 1002 including the flying capacitor matrix system 1100 uses common -3V, 0V, and 3V to combine three flying capacitors C12, C13, C14, and thus only uses 8 switches and 7 solar

In an embodiment, the number of flying capacitors in FIG.11 can be N, where N is a positive integer larger than 1. The number of the switches can be 2N+2, and the number of voltage stabilizing capacitors can be N, being coupled to corresponding output nodes.

In summary, the flying capacitor matrix systems 300, 500, 700, 900 and 1100 provide improvement to reduce the number of switches and solder pads, which reduces the number of switches and solder pads in the flying capacitor systems 204, 402, 602, 802 and 1002. Thus IC area and costs can be reduced.

## Claims

1. A flying capacitor matrix system (300, 700) for a charge pump, **characterized by** comprising:
a first flying capacitor (C2, C4) having a first node, and a second node;
a second flying capacitor (C3, C5) having a first node, and a second node coupled to the first node of the first flying capacitor (C2, C4);
a first switch (S5, S11) having a first node configured to receive a first voltage, and a second node coupled to the second node of the first flying capacitor (C2, C4);
a second switch (S6, S12) having a first node coupled to the second node of the first flying capacitor (C2, C4), and a second node;
a third switch (S7, S13) having a first node configured to receive a second voltage, and a second node coupled to the first node of the first flying capacitor (C2, C4);
a fourth switch (S8, S14) having a first node coupled to the first node of the first flying capacitor (C2, C4), and a second node configured to receive the first voltage;
a fifth switch (S9, S15) having a first node, and a second node coupled to the first node of the second flying capacitor (C3, C5); and
a sixth switch (S10, S16) having a first node coupled to the first node of the second flying capacitor (C3, C5), and a second node configured to receive the second voltage;
wherein in a first phase, the first switch (S5, S11), the third switch (S7, S13) and the fifth switch (S9, S15) are turned on, and the second switch (S6, S12), the fourth switch (S8, S14) and the sixth switch (S10, S16) are turned off, and in a second phase, the first switch (S5, S11), the third switch (S7, S13) and the fifth switch (S9, S15) are turned off, and the second switch (S6, S12), the fourth switch (S8, S14) and the sixth switch (S10, S16) are turned on.

2. The flying capacitor matrix system (300, 700) of claim 1, **characterized by** further comprising:
a first voltage stabilizing capacitor (CS4) coupled to the first node of the fifth switch (S9, S15);
a second voltage stabilizing capacitor (CS3) coupled to the second node of the second switch (S6, S12).

3. The flying capacitor matrix system (300, 700) of claim 1, **characterized in that** the first voltage is smaller than the second voltage.

4. The flying capacitor matrix system (700) of claim 1, **characterized by** further comprising:
a third flying capacitor (C6) having a first node coupled to the first node of the first flying capacitor (C4), and a second node;
a seventh switch (S17) having a first node configured to receive a third voltage, and a second node coupled to the second node of the third flying capacitor (C6);
an eighth switch (S18) having a first node coupled to the second node of the third flying capacitor (C6), and a second node;
wherein in the first phase, the seventh switch (S17) is turned on, and the eighth switch (S18) is turned off, and in the second phase, the seventh switch (S17) is turned off, and the eighth switch (S18) is turned on.

5. The flying capacitor matrix system (700) of claim 4, **characterized by** further comprising:
a first voltage stabilizing capacitor (CS3) coupled to the first node of the first switch (S11) and the second node of the fourth switch (S14);
a second voltage stabilizing capacitor (CS5) coupled to the first node of the fifth switch (S15);
a third voltage stabilizing capacitor (CS1) coupled to the second node of the second switch (S12); and
a fourth voltage stabilizing capacitor (CS2) coupled to the second node of the eighth switch (S18).

6. The flying capacitor matrix system (700) of claim 4, **characterized in that** the first voltage is smaller than the third voltage, and the third voltage is smaller than the second voltage.

7. A flying capacitor matrix system (900) for a charge pump, **characterized by** comprising:
N flying capacitors (C7-C11), an nth flying capacitor having a first node coupled to a second node of an (n+1)th flying capacitor, and a second node coupled to a first node of an (n-1)th flying capacitor;
N first switches (S19, S21, S23, S25, S27), an nth first switch having a first node coupled to an nth voltage, and a second node coupled to the second node of the nth flying capacitor;
an (N+1)th first switch (S29) having a first node, and a second node coupled to a first node of an Nth flying capacitor (C11);
N second switches (S22, S24, S26, S28, S30), an nth second switch having a first node coupled to the first node of the nth flying capacitor, and a second node coupled to the nth voltage;
an (N+1)th second switch (S20) having a first node coupled to a second node of a first flying capacitor (C7), and a second node;
wherein N>n>1, in a first phase, the N first switches (S19, S21, S23, S25, S27) and the (N+1)th first switch (S29) are turned on, and the N second switches (S22, S24, S26, S28, S30) and the (N+1)th second switch (S20) are turned off, and in a second phase, the N first switches (S19, S21, S23, S25, S27) and the (N+1)th first switch (S29) are turned off, and the N second switches (S22, S24, S26, S28, S30) and the (N+1)th second switch (S20) are turned on.

8. The flying capacitor matrix system (900) of claim 7, **characterized by** further comprising:
(N-2) voltage stabilizing capacitors (CS2, CS3, CS4), an nth voltage stabilizing capacitor being coupled to the first node of the nth first switch and the second node of the nth second switch;
an (N+1)th voltage stabilizing capacitor (CS5) coupled to the first node of the (N+1)th first switch (S29); and
an (N+2)th voltage stabilizing capacitor (CS1) coupled to the second node of the (N+1)th second switch (S20).

9. The flying capacitor matrix system (900) of claim 7, **characterized in that** the nth voltage is smaller than the (n+1)th voltage.
